# EUROPÄISCHE PATENTSCHRIFT

(11) **EP 1 551 092 B1**
(45) Veröffentlichungstag und Bekanntmachung des Hinweises auf die Patenterteilung: **22.07.2015**
(21) Anmeldenummer: 04106776.0
(22) Anmeldetag: 21.12.2004
(51) Int. Cl.: H02K 5/04

(54) **Schutzkappe, insbesondere für einen Drehstromgenerator**
Protection cover, specially for AC generator
Couvercle de protection, en particulier pour générateur alternatif

(30) Priorität: 30.12.2003 DE 10361860
(43) Veröffentlichungstag der Anmeldung: 06.07.2005
(73) Patentinhaber: ROBERT BOSCH GMBH, 70442 Stuttgart (DE)
(72) Erfinder: Lechner, Juergen, 71665, Vaihingen/Enz (DE); Sekertzis, Vassilios, 70439, Stuttgart (DE)

(56) Entgegenhaltungen:
- EP-A- 0 910 153
- EP-A- 1 094 145
- US-A1- 2002 063 488
- US-B1- 6 515 398
- PATENT ABSTRACTS OF JAPAN Bd. 005, Nr. 051 (E-051), 10. April 1981 (1981-04-10) -& JP 56 003545 A (HITACHI LTD), 14. Januar 1981 (1981-01-14)

## Beschreibung

### Stand der Technik

Aus dem Stand der Technik sind verschiedene Lösungen bekannt, um Schutzkappen, ganz besonders bei Generatoren, zu befestigen. So ist beispielsweise ein Generator der Firma Bosch bekannt, der die Typteilenummer 0 120 485 022 aufweist. Die Schutzkappe dieses Generators wird mittels dreier am Umfang der Schutzkappe, d.h. im Bereich des Kragens der Schutzkappe, angeordnete Schnapphaken befestigt. Diese Schnapphaken hintergreifen im montierten Zustand dabei eine Platte eines Kühlkörpers eines Gleichrichters.

Bei einer Nachfolgegeneration dieser Generatoren wurde eine Schutzkappe verwendet, die an sich eine kreisförmige Grundform aufweist, der jedoch ein erhebliches Stück dieser Grundform fehlt, da dort ein großes Kreissegmentstück "abgeschnitten" wurde. Die Schutzkappe weist drei Befestigungsstellen auf, die als Löcher ausgeführt sind, und über die die Schutzkappe mittels Schraubenbolzen bzw. Schraubenmuttern befestigt werden kann. Die Erfindung geht von einer Schutzkappe dieser Art aus.

Aus der Veröffentlichung US 5,757,096 ist ein Gehäuse von Kraftfahrzeugwechselstromgeneratoren bekannt. Es ist dort ein hinteres Generatorgehäuse gezeigt. Eine Seitenwand schließt Befestigungspunkte ein, um dieses hintere Generatorgehäuse mit einem vorderen Generatorgehäuse zu verbinden. Ein Befestigungsteil kann über seitliche Belüftungsöffnungen platziert werden.

Aus der Veröffentlichung US 6,304,012 B1 ist ein schleifringseitiges Endgehäuse bekannt. An diesem Endgehäuse kann eine Staubkappe befestigt werden.

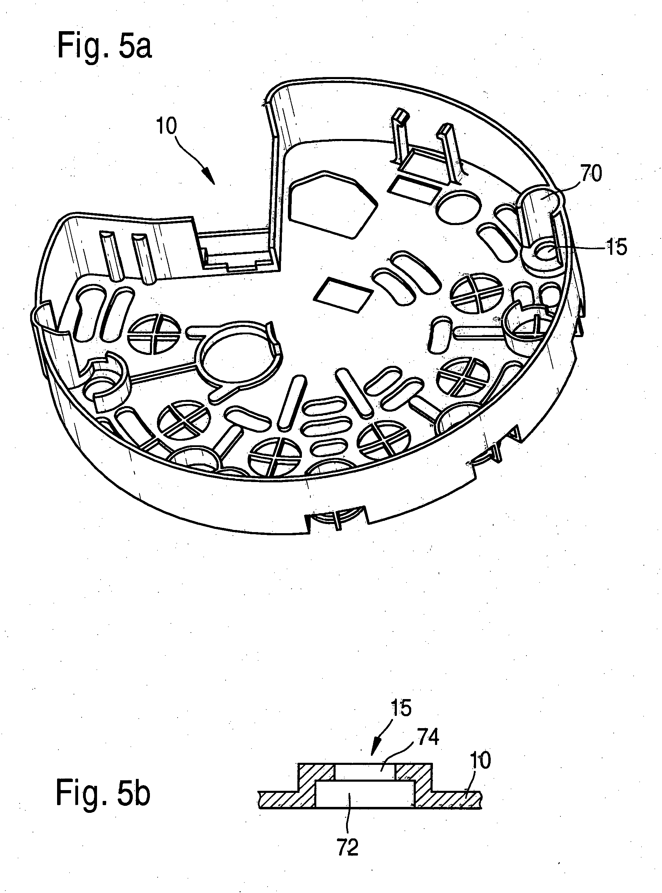

Aus der Veröffentlichung US 6,515,398 B1 ist ein Generator mit einer Schutzkappe bekannt, wobei diese im Wesentlichen Kreisform besitzt und mehrere Befestigungsstellen hat. Diese Schutzkappe weist des Weiteren eine Aussparung auf, die sich in an der Position 12 Uhr befindet. Ausgehend von der Aussparung jenseits der Verbindungslinie bei den beiden Befestigungsstellen im oberen Teil der Figur 5, ist eine weitere Befestigungsstelle angeordnet, die sich in etwa auf Position "halb sechs" befindet. Von dieser Offenbarung wird ausgegangen.

### Vorteile der Erfindung

Die erfindungsgemäße Schutzkappe mit den Merkmalen des Hauptanspruchs hat den Vorteil, dass trotz der in etwa sektorartigen vom Außenumfang der Schutzkappe ausgehenden Aussparung für die Schutzkappe ein Optimum an mechanischer Stabilität und Schwingungsfestigkeit erreicht wird. Zudem wird erreicht, dass der unter dieser Schutzkappe anzuordnende Gleichrichter bzw. Kühlkörper des Gleichrichters gut kühlbar ist.

Durch die in den Unteransprüchen aufgeführten Maßnahmen sind vorteilhafte Weiterbildungen der Schutzkappe nach dem Hauptanspruch möglich. Ist die Aussparung unsymmetrisch zur ersten und zweiten Befestigungsstelle angeordnet, ergeben sich unterschiedlich große Nachbarflächen dieser Aussparungen bis hin zu den Befestigungsstellen bzw. deren Verbindungslinie. Wird nun die dritte Befestigungsstelle der größeren der beiden Nachbarflächen diametral gegenüberliegend angeordnet, so werden insbesondere Schwingungen dieser größeren Nachbarfläche um die Achse - gebildet aus der Verbindungslinie zwischen erster und zweiter Befestigungsstelle - deutlich abgemildert. Ein Klappern der Schutzkappe wird dadurch vermieden. Die Schwingungsfestigkeit, insbesondere rund um die Befestigungsstellen mit der gemeinsamen Verbindungslinie, werden so geschont.

Die Verbindungslinie zwischen den beiden in etwa mittig angeordneten Befestigungsstellen weist eine bestimmte Länge auf. Für den Abstand der dritten Befestigungsstelle wurde festgestellt, dass es besonders günstig ist, wenn der Abstand zwischen der dritten und der ersten Befestigungsstelle das 0,45 bis 0,56-fache der Verbindungslinienlänge zwischen der ersten und zweiten Befestigungsstelle beträgt.

Eine weiter verbesserte Steifigkeit der Schutzkappe wird erreicht, indem diese mittels einer vierten Befestigungsstelle gesichert werden kann, wobei diese vierte Befestigungsstelle der dritten Befestigungsstelle im Wesentlichen diametral gegenüber angeordnet ist.

Dabei sollen sich die dritte und die vierte Befestigungsstelle in zwei diametral gegenüber angeordneten Sektoren befinden, die zueinander punktsymmetrisch angeordnet sind. Punktsymmetrisch bedeutet hier, dass diese symmetrisch zum Mittelpunkt des Kreisumfangs der Schutzkappe sind. Ein Öffnungswinkel der Sektoren soll hierbei zwischen 22° und 25° betragen.

Die vierte Befestigungsstelle soll dabei als Teil einer Schnappverbindung ausgebildet sein und vorzugsweise zwei Schnapphaken aufweisen. Dies hat den Vorteil, dass die Schutzkappe nach ihrer provisorischen Befestigung mittels der Schnapphaken in einer Fertigungslinie weitertransportiert werden kann, ohne dass die Gefahr einer Lageänderung besteht. Für die erste, zweite und dritte Befestigungsstelle ist jeweils ein Loch vorgesehen. Mittels dieser Löcher und dazu vorgesehener Schraubenbolzen kann die Schutzkappe richtig befestigt werden.

Für die dritte Befestigungsstelle kann deren Lage weiter konkretisiert werden, wobei die erste und zweite Befestigungsstelle im Wesentlichen auf einem imaginären Kreisbogen mit einem Radius angeordnet sind, wobei die dritte Befestigungsstelle auf einem kleineren Kreisbogen liegt und dessen Radius vorzugsweise zwischen 5% und 10% kleiner ist, als der imaginäre Kreisbogen der ersten und zweiten Befestigungsstelle.

An einer sogenannten Innenseite der Schutzkappe sind Rippen vorgesehen, um mit Kühlrippen eines von dieser Schutzkappe abgedeckten Kühlkörpers eine Wand zu bilden. Gemeinsam bilden sowohl die Kühlrippen, als auch die Rippen der Schutzkappe eine gemeinsame Wand, die Leckströmungsverluste vermeidet und somit die Kühlung des Kühlkörpers verbessert. Dabei ist vorgesehen, dass die Schutzkappe mit ihren Rippen pressend auf den Kühlrippen aufliegt und somit eine Schwingungsdämpfung sowohl beim Kühlkörper, als auch bei sich selbst ermöglicht.

### Zeichnungen

In den Zeichnungen ist ein Ausführungsbeispiel einer erfindungsgemäßen Schutzkappe dargestellt. Es zeigen:
- Figur 1: eine axiale Ansicht auf die Schutzkappe von außen,
- Figur 2: eine axiale Ansicht auf die Schutzkappe von innen,
- Figur 3: ein Schnittdarstellung durch die auf Kühlrippen des Gleichrichters liegende Schutzkappe,
- Figur 4: eine Schnittdarstellung der Fügepaarung zwischen Schnapphaken und Reglergehäuse,
- Figur 5a: eine räumliche Ansicht auf die Schutzkappe von innen,
- Figur 5b: einen Schnitt einer Befestigungsstelle,
- Figur 6: einen ausschnittsweisen Querschnitt durch den Verbund aus Schutzkappe, Kühlkörper und einer Verschaltungsplatte.

### Beschreibung

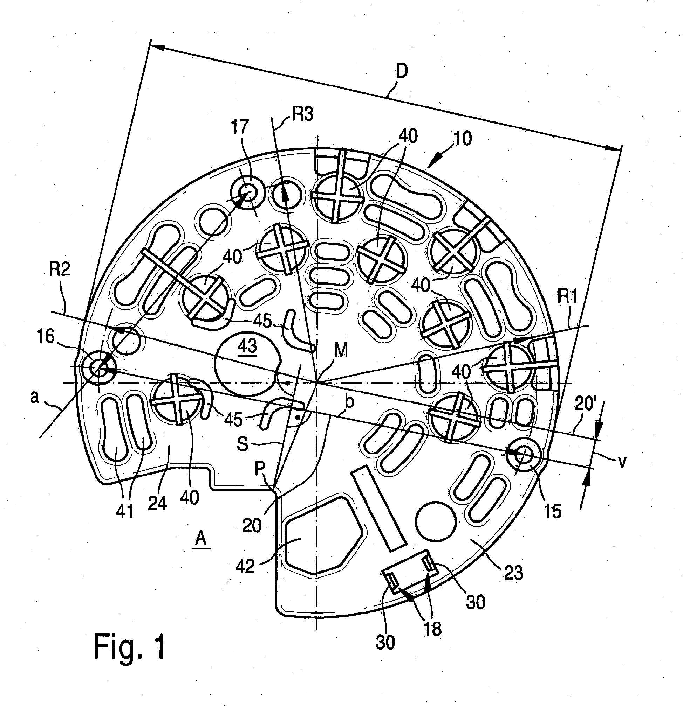

In Figur 1 ist die Draufsicht auf eine Schutzkappe 10 dargestellt. Diese Schutzkappe ist für einen Drehstromgenerator vorgesehen, der hier nicht dargestellt ist. Diese Schutzkappe 10 hat im Wesentlichen Kreisform und ist über mehrere Befestigungsstellen 15, 16 und 17 zu befestigen. Eine Befestigungsstelle 18 ist optional. Zwei der zumindest drei Befestigungsstellen 15, 16 und 17, nämlich die Befestigungsstellen 15 und 16, sind sich in etwa diametral gegenüber angeordnet. Die beiden Befestigungsstellen 15 und 16 haben zueinander einen Abstand b, welcher der Abstand zwischen den jeweiligen Wirkmittelpunkten der Befestigungsstellen 15 und 16 ist. Für den Fall, dass die Befestigungsstellen 15 und 16 jeweils aus einem Loch gebildet sind, ist der Wirkmittelpunkt der Mittelpunkt des Lochs. Die Verbindungslinie 20 ist eine gedachte Linie und lässt sich somit gedanklich in einen somit ebenfalls gedachten, konstruktiv jedoch vorhandenen Mittelpunkt M der Kreisform der Schutzkappe 10 verschieben. Zwischen der verschobenen Verbindungslinie 20' und der Verbindungslinie 20 ergibt sich somit ein radialer, vom Mittelpunkt M ausgehender, Versatz v. Die Verbindungslinie 20 teilt die Schutzkappe in zwei Bereiche, nämlich in einen oberhalb der Verbindungslinie 20 liegenden Bereich und einen unterhalb der Verbindungslinie 20 liegenden Bereich.

Der unterhalb der Verbindungslinie 20 liegende Bereich weist eine in etwa sektorartige, vom Außenumfang der Schutzkappe ausgehende Aussparung A auf. Diese Aussparung A nimmt in etwa 10% der gedachten Kreisfläche ein und erstreckt sich u.a. in Richtung zum Mittelpunkt M mit einer Erstreckung, die in etwa einem Viertel des Durchmessers D entspricht. Bei der Aussparung A lässt sich ein Punkt P bestimmen, der die Eigenschaft besitzt, dem Mittelpunkt M am nächsten gelegen zu sein. Von diesem Punkt P lässt sich eine Senkrechte auf die Verbindungslinie 20 fällen, so dass sich beiderseits der Senkrechten S zwei sogenannte Nachbarflächen 23 und 24 angeben lassen. Die Nachbarflächen 23 und 24 unterscheiden sich u.a. dadurch, dass diese unterschiedlich groß sind. Dabei ist hier vorgesehen, dass die Nachbarfläche 23 größer als die Nachbarfläche 24 ist. Als weitere Eigenschaft kann angegeben werden, dass die Nachbarfläche 23 mehr an einem Außenrand der Schutzkappe 10 angeordnete Flächenanteile aufweist, als die Nachbarfläche 24. Es ist vorgesehen, dass die Verbindungslinie 20 gegenüber der gedachten Verbindungslinie 20' um das 0,07 bis 0,16-fache des Halbmessers in Richtung zur Aussparung A versetzt ist. Des weiteren ist vorgesehen, dass die Befestigungsstelle 17 ausgehend von der Aussparung A jenseits der Verbindungslinie 20 angeordnet ist.

Es ist somit eine Schutzkappe 10 vorgesehen, wobei diese im Wesentlichen eine Kreisform besitzt und mehrere Befestigungsstellen 15, 16 und 17 hat und dass die Schutzkappe eine etwa sektorartige, vom Außenumfang der Schutzkappe 10 ausgehende Aussparung A aufweist. Zwei Befestigungsstellen, nachfolgend als erste und zweite Befestigungsstellen 15 und 16 bezeichnet, sind einander in etwa diametral gegenüber angeordnet. Eine gemeinsame Verbindungslinie zwischen den beiden Befestigungsstellen 15 und 16 ist ausgehend vom Durchmesser der Schutzkappe um das 0,07 bis 0,16-fache des Halbmessers in Richtung zur Aussparung A versetzt. Ausgehend von der Aussparung A ist jenseits der Verbindungslinie 20 eine weitere Befestigungsstelle, eine dritte Befestigungsstelle 17 angeordnet.

Des weiteren ist vorgesehen, dass einerseits die Aussparung A unterschiedlich große Nachbarflächen aufweist und die weitere, dritte Befestigungsstelle 17 der größeren der beiden Nachbarflächen 23 bzw. 24 diametral gegenüberliegt.

Zwischen der Befestigungsstelle 16 und der dritten Befestigungsstelle 17 lässt sich ebenfalls eine Verbindungslinie einbeschreiben, die hier als Strecke a und insofern als Abstand zwischen den Wirkungsmittelpunkten der Befestigungsstellen 16 und 17 bezeichnet wird. Im Vergleich mit dem Abstand b zwischen der ersten Befestigungsstelle 15 und der zweiten Befestigungsstelle 16 hat sich herausgestellt, dass es bezüglich der Strecke A günstig ist, wenn deren Länge in Bezug zum Abstand b das 0,50- bzw. 0,60-fache beträgt.

Wie bereits erwähnt, ist vorgesehen, dass die erste, zweite und dritte Befestigungsstelle 15, 16 und 17 für die Fixierung mittels Bolzen vorgesehen ist. Als Bolzen kommt hier beispielsweise der Bolzen einer Schraube in Frage. Hierzu ist es erforderlich, dass die Befestigungsstellen 15, 16 und 17 jeweils ein Loch aufweisen. Wie bereits erwähnt, ist optional vorgesehen, dass eine vierte Befestigungsstelle 18 an der Schutzkappe 10 verwirklicht ist. Während die drei bereits erwähnten Befestigungsstellen 15, 16 und 17 zur Befestigung der Schutzkappe 10 im Prinzip ausreichen und auch die Schwingungseigenschaften der Schutzkappe 10 günstig beeinflussen, so kann es dennoch dazu kommen, dass ohne die vierte Befestigungsstelle 18 es zu einem Klappern der Schutzkappe 10 an einem darunter angeordneten und hier nicht dargestellten Regler kommen kann. Es ist daher eine vierte Befestigungsstelle vorgesehen, die im Wesentlichen der dritten Befestigungsstelle 17 diametral gegenüber angeordnet ist. Ausgehend vom Mittelpunkt M lassen sich sowohl in Richtung zur Befestigungsstelle 18 als auch in Richtung zur Befestigungsstelle 17 jeweils Sektoren beschreiben, die zueinander punktsymmetrisch (Mittelpunkt M) sind. Beide Sektoren sollen zur Beschreibung einer günstigen Lage der vierten Befestigungsstelle 18 und der dritten Befestigungsstelle 17 zueinander einen Öffnungswinkel zwischen 22° und 25° aufweisen.

Die vierte Befestigungsstelle 18 soll dabei als Teil einer Schnappverbindung ausgebildet sein und vorzugsweise zwei Schnapphaken 30 aufweisen.

Während die Befestigungsstellen 15 und 16 auf einem gleichen bzw. nahezu gleichen Radius R1 (Befestigungsstelle 15) bzw. R2 (Befestigungsstelle 16) angeordnet sind, befindet sich die Befestigungsstelle 17 auf einem Radius R3, der kleiner ist, als R1 bzw. R2. Der Radius R3 soll zwischen 5% und 10% kleiner sein, als der Radius R1 bzw. R2. Es ist somit vorgesehen, dass die erste und zweite Befestigungsstelle 15 bzw. 16 im Wesentlichen auf einem imaginären Kreisbogen mit einem Radius R1 bzw. R2 angeordnet sind, wobei die dritte Befestigungsstelle 17 auf einem kleineren Kreisbogen mit dem Radius R3 liegt, welcher vorzugsweise zwischen 5% und 10% kleiner ist als R1 bzw. R2. Die Radien R1 bzw. R2 bzw. R3 gehen im übrigen vom Mittelpunkt M aus.

Die in Figur 1 gezeigte Außenseite der Schutzkappe 10 zeigt im übrigen noch verschiedene Kühlluftöffnungen. So sind einige runde Öffnungen 40 vorgesehen, die auf zwei verschiedenen Radien kreisförmig auf der Schutzkappe 10 verteilt sind. Diese runden Öffnungen 40 sind über sogenannten Diodenböden angeordnet und erlauben somit ein direktes Anströmen eben dieser Diodenböden zu deren besserer Kühlung. Des weiteren sind verschiedene Langlöcher 41 vorgesehen, die ebenfalls im Wesentlichen auf einem Radius angeordnet sind und ein Hinterströmen eines hinter der Schutzkappe 10 angeordneten Kühlkörpers ermöglichen. Die große Nachbarfläche 23 weist an die Aussparung A angrenzend eine Öffnung 42 auf, die dazu vorgesehen ist, Kühlluft für einen darunter angeordneten bzw. anzuordnenden Reglerkühlkörper eintreten zu lassen. Die Öffnung 43 ist dazu vorgesehen, einen sogenannten B+-Bolzen durchtreten zu lassen, um diesen mit Zuleitungen an eine Fahrzeugbatterie zu verbinden. Rund um die Öffnung 43 sind insgesamt vier Winkelelemente 45 angeordnet, die jeweils zwei Schenkel aufweisen, die zueinander rechtwinklig angeordnet sind. Diese Winkelelemente 45 definieren insgesamt zwei zueinander rechtwinklig angeordnete Führungen, die es ermöglichen, Zuleitungselemente zur Öffnung 43 in verschiedenen Positionen in ihrer Lage zu bestimmen.

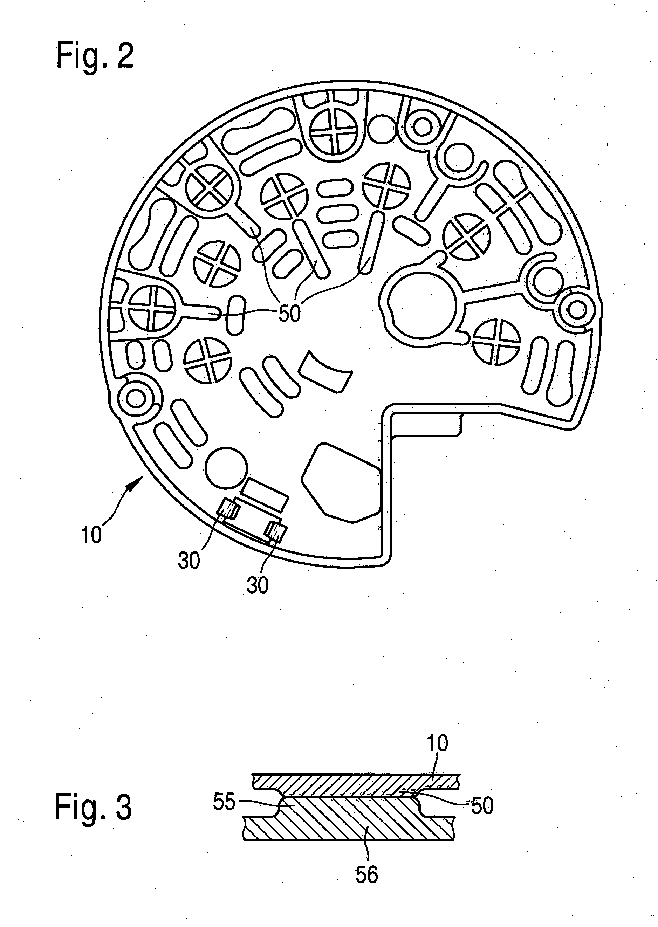

Figur 2 zeigt eine Innenansicht der Schutzkappe 10. Diese Ansicht gewährt den Blick auf mehrere Rippen 50, die dazu vorgesehen sind, mit Kühlrippen eines Kühlkörpers zusammen zu wirken. Wie in Figur 3 dargestellt ist, liegt die Schutzkappe 10 mit ihren Rippen 50 auf Kühlrippen eines Kühlkörpers 56 unmittelbar oder alternativ fast auf. Die Rippen 50 an der Innenseite der Schutzkappe 10 bilden mit den Kühlrippen 55 des von der Schutzkappe 10 abgedeckten Kühlkörpers 56 gemeinsam eine Wand, die Leckströmungsverluste zwischen Rippen 50 und Kühlrippen 55 vermeiden und durch die zusätzliche pressende Auflage eine Schwingungsdämpfung für die Schutzkappe 10 ermöglichen. In Figur 2 sind ebenfalls, allerdings in ihrer Draufsicht, d.h. hier in Fügerichtung, die beiden Schnapphaken 30 zu erkennen, die einstückig mit der Schutzkappe 10 verbunden sind.

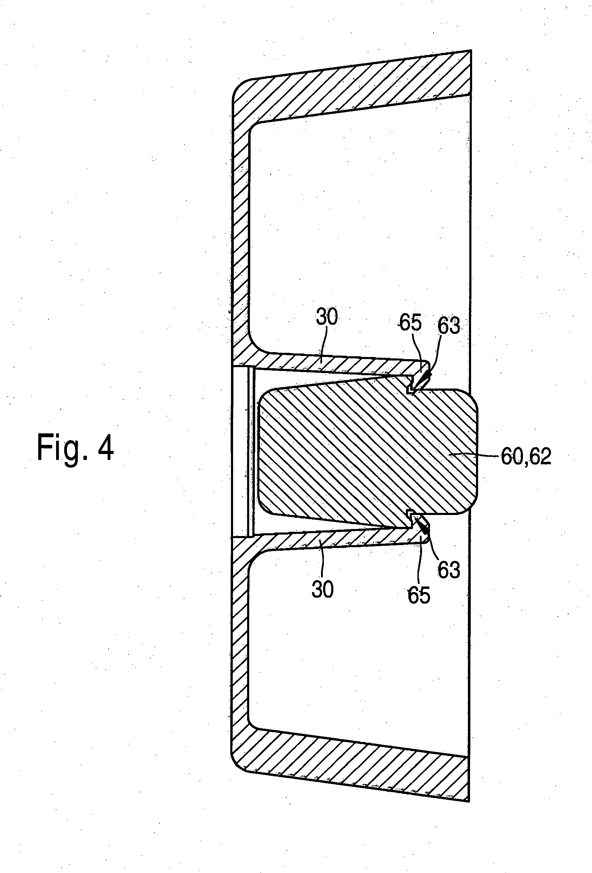

In Figur 4 ist ausschnittweise die Fügepaarung zwischen den Schnapphaken 30 und einem Reglergehäuse 60 zu erkennen. Der hier dargestellte Bereich des Reglergehäuses 60 ist genau genommen der Gehäusebereich, der als Bürstenköcher 62 dient. Dieser Bürstenköcher 62 weist zwei Hinterschnitte 63 auf, die zueinander in einer Ebene angeordnet sind. Ist die Schutzkappe 10 mit den Schnapphaken 30 befestigt, so greifen diese Schnapphaken 30 mit ihren Hakenenden 65 in die Hinterschnitte 63 des Bürstenköchers 62 ein. Die Schnapphaken 30 bilden zusammen ein Schnapphakenpaar, dass derartig in der Länge, d.h. in Fügerichtung, bestimmt ist, dass im eingeschnappten Zustand eine Vorspannung zwischen Schnapphaken 30 und Hinterschnitten 63 vorherrscht. Das heißt, die Schnapphaken 30 sind ständig auf Zug belastet. Dazu ist vorgesehen, dass das Höhenniveau des Schnapphakenpaars axial über der Schnappfläche, d.h. den Hinterschnitten 63 des Bürstenköchers 62 ist, so dass sich eine Vorspannung ergibt. Es ist dabei vorgesehen, dass die Differenz des Höhenniveaus zwischen den Fügepartnern Schnapphaken 30 und Bürstenköcher 62 bis zu 1 mm differiert. In jedem Fall ist dieses Höhenniveau größer 0 mm und es wird ein Wert von 0,4 mm bevorzugt. Für die Fügung von Schutzkappe 10 mit dem Reglergehäuse 60 bzw. Bürstenköcher 62 ist daher speziell an diesem Bereich ein Druck auf die Schutzkappe 10 erforderlich, um ein Durchbiegen dieser zu erreichen, um letztlich die Schnapphaken 30 einrasten zu lassen.

Figur 5a zeigt beispielhaft eine Befestigungsstelle, wie sie beispielhaft für eine Befestigungsstelle 15, 16 oder 17 sein kann. Diese Befestigungsstelle weist an der Innenseite der Schutzkappe 10 einen einstückig an diese angeformten Hohlzylinderabschnitt auf. Ein jeder dieser Hohlzylinderabschnitte 70 liegt passend an einem Dom auf der Verschaltungsplatte an. Dies ergibt eine eindeutige Lage zwischen Schutzkappe 10 und Verschaltungsplatte 80.

Figur 5b zeigt die Befestigungsstelle 15, stellvertretend für die anderen Befestigungsstellen 16 bzw. 17. Die Schutzkappe 10 weist an dieser Stelle eine zylindrische Ausformung 72 auf, von der als Befestigungsstelle 15 ein Loch 74 ausgeht.

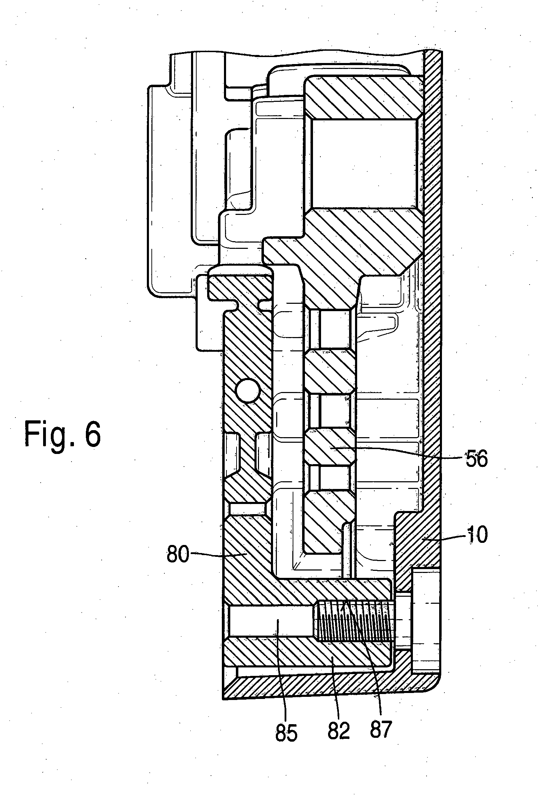

Figur 6 zeigt in einem Querschnitt ausschnittsweise den Verbund aus Schutzkappe 10, Kühlkörper 56 und einer Verschaltungsplatte 80. Diese Verschaltungsplatte 80 liegt unter dem Kühlkörper 56. Die Verschaltungsplatte 80 hat einen Dom 82, der einstückig von der Verschaltungsplatte 80 ausgeht und zur Schutzkappe 10 bzw. deren Innenseite gerichtet ist. Der Dom endet kurz vor einer der Befestigungsstellen 15, 16 bzw. 17, wobei zwischen der Befestigungsstelle und einer Stirnfläche des Doms 82 ein Spalt vorgesehen ist. Der Dom 82 selbst weist abgesehen von der Schutzkappe 10 zunächst einen zylindrischen, gewindefreien Abschnitt 85 auf, der schließlich in eine Gewindebohrung 87 übergeht. Dies ermöglicht ein Verbinden der Schutzkappe 10 über eine Befestigungsstelle mittels einer Schraube.

## Patentansprüche

1. Drehstromgenerator, mit einer daran befestigten Schutzkappe, wobei diese im Wesentlichen Kreisform besitzt und mehrere Befestigungsstellen hat und eine in etwa sektorartige, vom Außenumfang der Schutzkappe (10) ausgehende Aussparung (A) aufweist und zwei aus je einem Loch gebildete Befestigungsstellen (15, 16) in etwa diametral gegenüber angeordnet sind, wobei die Löcher der Befestigungsstellen (15, 16) einen Mittelpunkt haben, der ein Wirkmittelpunkt ist, wobei eine gemeinsame Verbindungslinie (20) zwischen den Wirkmittelpunkten der beiden Befestigungsstellen (15, 16) vom Durchmesser um das 0,07 bis 0,16-fache des Halbmessers in Richtung zur Aussparung (A) versetzt ist und ausgehend von der Aussparung jenseits der Verbindungslinie (20) eine weitere Befestigungsstelle (17) angeordnet ist.

2. Drehstromgenerator nach Anspruch 1, **dadurch gekennzeichnet, dass** sich bei der Aussparung (A) ein Punkt (P) bestimmen lässt, der einem Mittelpunkt (M) der Kreisform der Schutzkappe am nächsten gelegen ist und sich eine Senkrechte (S) von dem Punkt (P) auf die Verbindungslinie (20) fällen lässt, und die Aussparung (A) unterschiedlich große Nachbarflächen (23, 24) aufweist, die sich beiderseits der Senkrechten (S) befinden, wobei die weitere, dritte Befestigungsstelle (17) der größeren der beiden Nachbarflächen diametral gegenüber liegt.

3. Drehstromgenerator nach Anspruch 2, **dadurch gekennzeichnet, dass** die dritte Befestigungsstelle (17) von einer der beiden anderen Befestigungsstellen (15, 16) um die Strecke (a) entfernt ist, wobei (a) zwischen dem 0,50- und dem 0,60-fachen eines Abstands (b) beträgt, der der Abstand (b) zwischen dem Wirkmittelpunkt der ersten Befestigungsstelle (15) und dem Wirkmittelpunkt der zweiten Befestigungsstelle (16) ist.

4. Drehstromgenerator nach einem der vorstehenden Ansprüche, **dadurch gekennzeichnet, dass** der dritten Befestigungsstelle (17) eine vierte Befestigungsstelle (18) im wesentlichen diametral gegenüber angeordnet ist.

5. Drehstromgenerator nach Anspruch 4, **dadurch gekennzeichnet, dass** sich die dritte Befestigungsstelle (17) und die vierte Befestigungsstelle (18) in zwei diametral gegenüber angeordneten Sektoren befinden (punktsymmetrisch), wobei ein Öffnungswinkel der Sektoren zwischen 22° und 25° beträgt.

6. Drehstromgenerator nach einem der vorstehenden Ansprüche 4 oder 5, **dadurch gekennzeichnet, dass** die vierte Befestigungsstelle (18) als Teil einer Schnappverbindung ausgebildet ist und vorzugsweise zwei Schnapphaken (30) aufweist.

7. Drehstromgenerator nach einem der vorstehenden Ansprüche, **dadurch gekennzeichnet, dass** die erste Befestigungsstelle (15),die zweite Befestigungsstelle (16) und dritte Befestigungsstelle (17) je ein Loch (74) aufweist.

8. Drehstromgenerator nach einem der vorstehenden Ansprüche, **dadurch gekennzeichnet, dass** die erste Befestigungsstelle (15) und die zweite Befestigungsstelle (16) im wesentlichen auf einem imaginären Kreisbogen mit einem Radius angeordnet sind (vom Mittelpunkt der Kappe ausgehend), wobei die dritte Befestigungsstelle (17) auf einem kleineren Kreisbogen liegt, dessen Radius vorzugsweise zwischen 5 und 10% kleiner ist.

9. Drehstromgenerator nach einem der vorstehenden Ansprüche, **dadurch gekennzeichnet, dass** diese an ihrer Innenseite Rippen (50) aufweist, die dazu vorgesehen sind, mit Kühlrippen (55) eines von dieser abgedeckten Kühlkörpers (56) eine Wand zu bilden, die Leckströmungsverluste vermeidet und durch pressende Auflage eine Schwingungsdämpfung ermöglicht.

## Claims

1. Three-phase generator, having a protective cap which is fastened to it, wherein the said protective cap has a substantially circular shape and has a plurality of fastening points and has an approximately sector-like cutout (A) which starts from the outer circumference of the protective cap (10), and two fastening points (15, 16), which are formed from a hole in each case, are arranged approximately diametrically opposite, wherein the holes of the fastening points (15, 16) have a centre point which is an operative centre point, wherein a common connecting line (20) between the operative centre points of the two fastening points (15, 16) is offset from the diameter by 0.07 to 0.16 times the radius in the direction of the cutout (A) and a further fastening point (17) is arranged starting from the cutout on the other side of the connecting line (20).

2. Three-phase generator according to Claim 1, **characterized in that** a point (P) can be determined in the cutout (A), which point is positioned closest to a centre point (M) of the circular shape of the protective cap, and a perpendicular (S) can extend from the point (P) to the connecting line (20), and the cutout (A) has neighbouring areas (23, 24) of different sizes, which neighbouring areas are located on either side of the perpendicular (S), wherein the further, third fastening point (17) of the larger of the two neighbouring areas is situated diametrically opposite.

3. Three-phase generator according to Claim 2, **characterized in that** the third fastening point (17) is at a distance from one of the two other fastening points (15, 16) by the length (a), wherein (a) is between 0.50 and 0.60 times a distance (b) which is the distance (b) between the operative centre point of the first fastening point (15) and the operative centre point of the second fastening point (16).

4. Three-phase generator according to one of the preceding claims, **characterized in that** a fourth fastening point (18) is arranged substantially diametrically opposite the third fastening point (17).

5. Three-phase generator according to Claim 4, **characterized in that** the third fastening point (17) and the fourth fastening point (18) are located (with point symmetry) in two sectors which are arranged diametrically opposite, wherein an opening angle of the sectors is between 22° and 25°.

6. Three-phase generator according to either of the preceding Claims 4 and 5, **characterized in that** the fourth fastening point (18) is in the form of part of a snap-action connection, and preferably has two snap-action hooks (30).

7. Three-phase generator according to one of the preceding claims, **characterized in that** the first fastening point (15), the second fastening point (16) and third fastening point (17) each has a hole (74).

8. Three-phase generator according to one of the preceding claims, **characterized in that** the first fastening point (15) and the second fastening point (16) are arranged substantially on an imaginary arc of a circle with one radius (starting from the centre point of the cap), wherein the third fastening point (17) is situated on a smaller arc of a circle of which the radius is preferably between 5 and 10% smaller.

9. Three-phase generator according to one of the preceding claims, **characterized in that** the protective cap has, on its inner face, ribs (50) which are intended to form a wall with cooling ribs (55) of a heat sink (56) which is covered by the said protective cap, the said wall preventing leakage flow losses and allowing vibration damping by pressing contact.

## Revendications

1. Générateur de courant triphasé, sur lequel est fixé un capot de protection, celui-ci possédant une forme sensiblement circulaire ainsi que plusieurs points de fixation, et présentant un évidement (A) approximativement en secteurs à partir du pourtour extérieur du capot de protection (10) et deux points de fixation (15, 16), respectivement réalisés sous la forme d'un trou, disposés à peu près diamétralement opposés, les trous des points de fixation (15, 16) possédant un point central qui est un point central actif, une ligne de liaison (20) commune entre les points centraux actifs des deux points de fixation (15, 16) étant décalée du diamètre de 0,07 à 0,16 fois le rayon en direction de l'évidement (A) et, à partir de l'évidement, un point de fixation supplémentaire (17) étant disposé de l'autre côté de la ligne de liaison (20).

2. Générateur de courant triphasé selon la revendication 1, **caractérisé en ce qu'**il est possible de définir au niveau de l'évidement (A) un point (P), lequel se trouve le plus proche d'un point central (M) de la forme circulaire du capot de protection et une verticale (S) peut être tracée du point (P) sur la ligne de liaison (20), et l'évidement (A) présente des surfaces voisines (23, 24) de tailles différentes qui se trouvent des deux côtés de la verticale (S), le troisième point de fixation (17) supplémentaire se trouvant diamétralement opposé à la plus grande des deux surfaces voisines.

3. Générateur de courant triphasé selon la revendication 2, **caractérisé en ce que** le troisième point de fixation (17) est éloigné de l'un des deux autres points de fixation (15, 16) de la distance (a), (a) étant comprise entre 0,50 et 0,60 fois un écart (b), l'écart (b) se trouvant entre le point central actif du premier point de fixation (15) et le point central actif du deuxième point de fixation (16).

4. Générateur de courant triphasé selon l'une des revendications précédentes, **caractérisé en ce qu'**un quatrième point de fixation (18) est disposé sensiblement diamétralement opposé au troisième point de fixation (17).

5. Générateur de courant triphasé selon la revendication 4, **caractérisé en ce que** le troisième point de fixation (17) et le quatrième point de fixation (18) se trouvent dans deux secteurs disposés diamétralement opposés (symétrie ponctuelle), un angle d'ouverture des secteurs étant compris entre 22° et 25°.

6. Générateur de courant triphasé selon l'une des revendications 4 ou 5, **caractérisé en ce que** le quatrième point de fixation (18) est réalisé en tant que partie d'une liaison par encliquetage et présente de préférence deux crochets d'encliquetage (30).

7. Générateur de courant triphasé selon l'une des revendications précédentes, **caractérisé en ce que** le premier point de fixation (15), le deuxième point de fixation (16) et le troisième point de fixation (17) présentent chacun un trou (74).

8. Générateur de courant triphasé selon l'une des revendications précédentes, **caractérisé en ce que** le premier point de fixation (15) et le deuxième point de fixation (16) sont disposés sensiblement sur un arc de cercle imaginaire ayant un rayon (à partir du point central du capot), le troisième point de fixation (17) se trouvant sur un arc de cercle plus petit dont le rayon est de préférence plus petit de 5 à 10 %.

9. Générateur de courant triphasé selon l'une des revendications précédentes, **caractérisé en ce que** le capot de protection présente sur son côté intérieur des nervures (50) qui sont conçues pour former, avec des ailettes de refroidissement (55) d'un radiateur (56) recouvert par celui-ci, une paroi qui prévient les pertes par courant de fuite et qui, par une application par compression, permet un amortissement des vibrations.
